# EUROPEAN PATENT SPECIFICATION

(11) **EP 2 274 230 B1**
(45) Date of publication and mention of the grant of the patent: **04.07.2012**
(21) Application number: 09727822.0
(22) Date of filing: 27.03.2009
(51) Int. Cl.: B67D 1/04

(54) **BEVERAGE TAPPING APPARATUS, PROVIDED WITH A CHEMICAL PRESSURE GENERATOR**
MIT EINEM CHEMISCHEN DRUCKERZEUGER VERSEHENE GETRÄNKEZAPFVORRICHTUNG
APPAREIL DE DISTRIBUTION DE BOISSON POURVU D'UN GÉNÉRATEUR DE PRESSION CHIMIQUE

(30) Priority: 31.03.2008 NL 1035235
(43) Date of publication of application: 19.01.2011
(73) Proprietor: Heineken Supply Chain B.V., 1017 ZD Amsterdam (NL)
(72) Inventor: HUMPHRIES, Mark, Walden Essex CB10 1PL (GB); COPPENDALE, John, Stapleford Cambridgeshire CB22 5BX (GB); RUSSELL, David Morrison, Cambridge Cambridgeshire CB5 8QT (GB); STONEHOUSE, David Richard, Cambridge Cambridgeshire CB4 3BS (GB); EDINGTON, David William Neil, St Albans Hertfordshire AL1 3QA (GB)
(74) Representative: Jansen, Cornelis Marinus
(86) International application number: PCT/NL2009/050159
(87) International publication number: WO 2009/123449

(56) References cited:
- EP-A- 0 372 569
- DE-C- 24 736
- US-A- 5 350 587
- US-A- 5 565 149

## Description

The invention relates to a tapping device, provided with a pressure regulating device.

For dispensing beverage from beverage containers, different principles are known. For instance, use is made of gravity in gravity flow cans, use is made of external CO₂ sources, such as a gas bottle with reducing device for introducing CO₂ gas into the beverage container for pressurizing the beverage therein, and use is made of air pumps for pressurizing beverage in a bag-in-box (BIB) or bag-in-container (BIC) package. Gravity flow has as a drawback that the pressure is not constant and is furthermore low, so that a disadvantageous tapping behaviour develops, in particular in the case of, for instance, beer. Use of external CO₂ sources has as a drawback that they need to be maintained and connected while furthermore, they are to be made or kept available, which is expensive and time consuming. Furthermore, their use requires sufficient experience and special safety precautions. Use of a pump has as a drawback that an external device is required to that end, which is relatively expensive. Furthermore, in order to preserve the quality of the beverage, use of a container with an inner bag is required, which is expensive and furthermore leads to much packaging material.

In order to solve many of these problems, it has already been proposed to attach a pressure regulating device in or on the container, which pressure regulating device, during use, automatically arranges for the beverage in the beverage container to be held at a desired pressure. Such a tapping apparatus is known from, for instance, EP1170247. Here, the pressure regulating device comprises a compartment filled with CO₂ gas under pressure and a medium absorbing and/or adsorbing the CO₂ gas at least partly, such as activated carbon. Such a tapping device can be used without external pressure source for tapping beverage. However, with this device, CO₂ gas is to be introduced and held into the regulating device under pressure and to be disposed in a dosed manner.

US5350587 corresponds to the preamble of claim 1 and discloses a beverage container with a pressure regulator in which two compartments are provided, in communication with each other through an open orifice. A first, liquid, component is provided in the first compartment, a second, solid, component in the second compartment. A reference pressure provided by a gas filled bellows or spring loaded piston pressurises the first compartment into and/or through the orifice, counteracted by a gas pressure generated by gas formed through a chemical reaction between the two components in the second compartment. When the reference pressure is met by the gas generated pressure in the second compartment, flow of the first component through the orifice is stopped, inter alia by surface tension of the first component in the orifice, which will stop the gas production in the second compartment. Over time the first component will reduce in volume in the first compartment, which will result in a reduction of the reference pressure.

An object of the present invention is to provide an alternative tapping apparatus, provided with a pressure regulating device for pressurizing beverage in the tapping apparatus.

In a first aspect, a tapping apparatus according to this invention is disclosed according to appended claim 1.

In one embodiment, the beverage holder can be an outer holder, such as a container, keg, BIC, BIB or other beverage containing holder.

In a second aspect, a pressure regulating device is disclosed according to claim 11.

In a further aspect, in this specification, a method is disclosed according to claim 12.

Apparatuses and methods according to this specification will be further elucidated on the basis of the Figures. In the Figures:
Fig. 1 schematically shows, in cross-sectional side view, a tapping apparatus according to the description;
Fig. 2 schematically shows, in cross sectional side view, a second embodiment of a tapping apparatus according to the description;
Fig. 3 shows, schematically and in cross section, a pressure regulating device;
Figs. 4A-D show four steps in the use of a tapping apparatus according to Fig. 1 or 2; and
Fig. 5 shows a further alternative embodiment of a tapping apparatus according to the description.

In this specification, identical or corresponding parts have identical or corresponding reference numerals. The embodiments shown and described are shown merely by way of illustration and should not be construed to be limitative in any manner. In this specification, the starting point will be a carbonated (CO₂) beverage, in particular beer, such as a lager beer. However, the invention is not limited thereto. In the exemplary embodiments shown, in each case, a beverage holder is shown and described which is substantially cylindrical, with a bottom and a cover. Tapping means extend at least partly above and/or through the cover. However, the tapping means can also be at a different position, for instance in a sidewall adjacent the cover, a central area of the sidewall and/or in or adjacent the bottom, while the beverage holder can also have a different shape. The beverage holder can be manufactured from metal, plastic, glass or a combination thereof, or other suitable materials. The beverage holder can also comprise an inner holder, such as a bag, in which the beverage is included. The gas can be dispensed directly into the beverage but can for instance also inflate a bag in the beverage and/or compress a bag around the beverage so that beverage is pressurized without direct contact between the beverage and the gas.

In this specification, dosing is to be understood as at least comprising but not limited to joining components in measured quantities and/or specific joining of components.

With a package according to the invention, preferably, no external pressure source is required. What is thus prevented is that an external pressure source is to be connected to the package, or that the use of the package depends on the availability of this external pressure source, which would render flexible use particularly hard or even impossible, while furthermore, such an external pressure source is often cost-increasing.

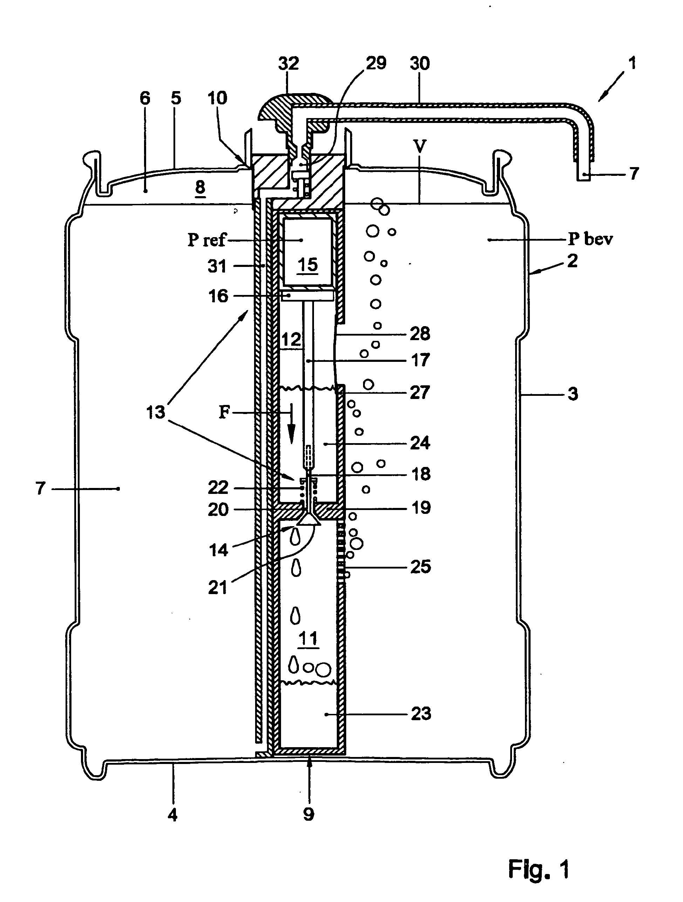

In Fig. 1, in cross-sectional side view, a tapping apparatus 1 is shown. The tapping apparatus 1 comprises a beverage holder 2, manufactured in this embodiment as a metal or plastic can. In other embodiments, the beverage holder can be manufactured from a combination of metal and/or plastic and/or paper or cardboard. In the embodiment shown, the beverage holder 2 comprises a wall 3, a bottom 4 and a cover 5. In one embodiment, these can be mutually connected by for instance known folding, welding or gluing techniques or otherwise. In another embodiment, different parts can be integrally manufactured. In the beverage holder 2, an inner space 6 is provided in which beverage 7 can be included. A head space 8 can then be provided above the level V of the beverage 7.

The tapping apparatus 1 is provided with a regulating device 9. In the exemplary embodiment shown, the regulating device 9 is inserted through an opening 10 in the cover. In this and other embodiments, the regulating device can extend wholly or partly in the inner space 6 or be provided wholly or partly outside the tapping apparatus 1, while a gas connection will be provided between the regulating device 9 and the inner space 6.

In the embodiment shown in Fig. 1, the regulating device 9 comprises a first compartment 11 and a second compartment 12 located at least partly thereabove. In another embodiment, the second compartment 12 can be located next to or below the first compartment 11. In a further embodiment, different first 11 and/or second compartments 12 can be provided. In the regulating device 9, a dosing device 13 is provided. The dosing device comprises a valve 14, which, in an opened position such as shown in Fig. 1, can connect the second compartment 12 to the first compartment 11 and, in a closed position, separates the second compartment 12 from the first compartment 11. In one embodiment, as shown in Fig. 1, the dosing device 13 can be pressure-controlled. In one embodiment, the dosing device 13 comprises to that end a pressure controlled valve 14. In one embodiment, the dosing device 13 can be provided with a chamber 15 with at least one wall part 16 movable relative to the chamber 15. In one embodiment, the wall part 16 can form or comprise a piston. In another embodiment, the wall part 16 can be wholly or partly deformable, for instance elastically deformed, and may be formed from plastic or metal. The movable wall part 16 offers the possibility that the volume of the chamber 15 can change. In different embodiments, the volume of the chamber 15 can change through displacement of and/or deformation of the wall part 16 relative to the further chamber 15. In embodiments, the volume can change under the influence of for instance, but not limited to pressure change in the inner space 6, pressure change in the first compartment 11, pressure change in the second compartment 12, pressure change in the chamber 15 and/or through mechanical influencing of the wall part 16 and/or the chamber 15, or a combination of two or more of these effects.

In the exemplary embodiment represented in Fig. 1, the chamber 15 is provided above the second compartment 12. However, this can also be provided at a different position, for instance between the two compartments 11, 12 or below the lower compartment 11.

In the exemplary embodiment shown in Fig. 1, the wall part 16 is provided at an underside of the chamber 15 while the chamber 15 is placed on a side of the second compartment 12 opposite the first compartment 11. A rod 17 is provided between the wall part 16 and a valve rod 18 of the valve 14. Between the first compartment 11 and the second compartment 12, a partition wall 19 is provided in which an opening 20 is provided that can be sealed off by the valve 14. Between the partition wall 19 and the dish 21 on the valve rod 18 a spring 22 is provided, whereby the valve 14 is biased in the closed position. When pressure is exerted by the rod 17 on the valve rod 18, in the direction F away from the chamber 15, the spring 22 is compressed to some extent and the opening 20 is at least partly cleared by the valve 14, so that a fluid communication is formed between the second compartment 12 and the first compartment 11. If the pressure of the rod 17 on the valve rod 18 is removed, for instance in that the wall part 16 in Fig. 1 moves upwards, the spring 22 will press the valve 14 in the direction of the closed position, optionally supported by pressure in the first compartment 11.

In the first compartment 11, a first component 23 is included, in the second compartment 12 a second component 24. In this specification, with regard to the first and second component 23, 24, component is understood to mean at least but no exclusively single chemicals or compounds of chemicals, which can be provided in solid form, liquid form, suspension and/or solution. The first component 23 and the second component 24 can react with each other and/or with a further component, such as for instance but not limited to water, beer, soft drink, while forming a gas. In one embodiment, the first and second component 23, 24 can react, optionally together with one or more further components, while forming carbon dioxide (CO₂). In one embodiment, the first component 23 can be a solid or a liquid. The second component 24 can for instance be a liquid, a solution or suspension. The first and/or second component 23, 24 can comprise different substances, for instance a mixture or a solution. In one embodiment, the first component 23 can comprise a (bi-) carbonate, and the second component 24 an acid, for instance an acid/water solution.

One of the compartments 11, 12 is in communication with the inner space 6 of the beverage holder 2, in particular a compartment 11, 12 in which during use a gas will develop. In one embodiment, the first compartment 11 can be provided with at least one passage in which a membrane 25 is included. The membrane 25 is for instance gas-transmissive yet liquid-tight. The membrane 25 can be a hydrophobic membrane. A non-limitative example of such a membrane 25 is stretched PTFE foil, commercially available under the brand name Goretex®.

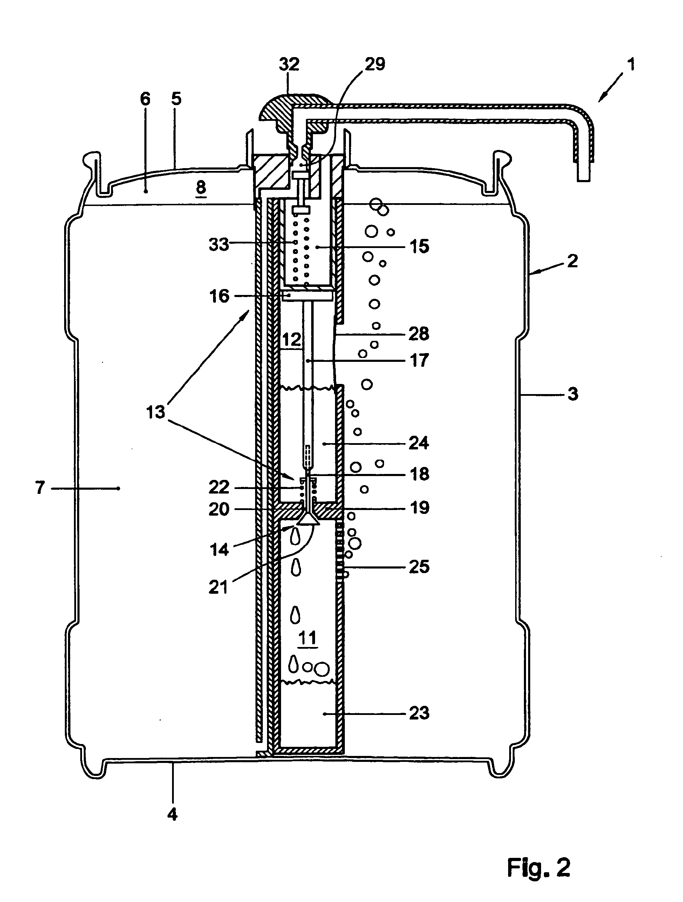

In one embodiment, in the chamber 15, a reference pressure P_{ref} can prevail, for instance a pressure P_{ref} which corresponds to a desired pressure P_{bev} in the inner space 6. In an alternative embodiment, in the chamber 15 between the movable wall part 16 and the opposite wall 26 of the chamber 15, a spring can be provided (comparable to Fig. 2) which exerts a bias on the wall part 16 when the valve 14 is closed. With it, the pressure in the chamber can be reduced and still a desired pressure can be exerted in the direction of the wall 19. When a spring is used in this manner, optionally there can be a direct, open communication between the surrounding atmosphere and the chamber, so that the outside air (atmospheric pressure) can function as pressure in the chamber 15.

In the exemplary embodiment shown in Fig. 1, in the wall 27 of the second compartment 12, a second membrane 28 is provided. In one embodiment, this second membrane 28 can be liquid-tight and gas-transmissive. In such an embodiment, it can be a hydrophobic membrane. A non-limitative example of a material for manufacturing at least one part of such a membrane 28 is stretched PTFE foil, commercially available under the brand name Goretex®. In such an embodiment, the pressure in the second compartment 12 will be virtually equal to that in the beverage containing inner space 6. With a pressure drop in the inner space 6, as a result of, for instance, reduction of the amount of beverage therein, the pressure in the second compartment 12 will also fall, so that the wall part 16 with the rod 17 will move in the direction of the first compartment 11 and the valve 14 will open. As a result, a part of the second component 24 will be added to the first compartment 11 to the first component 23 and cause gas to develop. This gas will flow into the inner space 6, through the membrane 25, and increase the pressure therein to the desired pressure P_{bev}. With this, the pressure in the second compartment 12 increases again too such that the wall part 16 is pressed upward again and the valve 14 is closed.

In an alternative embodiment, the second membrane 28 can be liquid-tight and gastight and be of flexible or movable design. With pressure difference between the beverage containing inner space 6 of the beverage holder 2 and the second compartment 12, the second membrane 28 may deform and thus influence the pressure in the second compartment 12. With a pressure drop in the inner space 6, the second membrane 28 will move outwards, i.e. in the direction of the inner space 6, whereby the volume of the second compartment increases and therefore the pressure decreases. Thus, in the above-described manner, the valve 14 is opened through movement of the wall part 16. Gas will develop in the first compartment 11, so that the pressure in the inner space will be returned towards, to or even be slightly higher than the desired pressure P_{bev}. As a result, the second wall part 28 is pressed back in the direction of the second compartment 12, the valve is closed again and the equilibrium is restored.

In the embodiment shown in Fig. 1, above the regulating device, a valve 29 is provided. In one embodiment, this can be a valve as used in aerosol containers. However, any suitable type of valve can be used to this end. On the outside of the beverage holder 2 a dispensing tube links up with the valve 29, while on the side proximal to the inner space 6, a riser 31 is provided which reaches from the underside of the valve 29 to adjacent the bottom 4 of the beverage holder 2. During use, the valve 29 can be pressed down, for instance with the aid of an operating button 32, whereby it is opened. As the pressure P in the inner space 6 has been brought to the desired pressure P_{bev}, when the valve 29 is opened, beverage will flow away from the inner space via the riser 31, the valve 29 and the dispensing tube 30, so that the above-described pressure drop occurs which is compensated in the described manner through reaction of the first and second component 23, 24 in the suitable proportion, so that the pressure in the inner space 6 is returned to the desired pressure P_{bev}.

Preferably, the regulating device 9, together with the valve 29 and the riser 31, is designed as a unit which can be integrally arranged in the beverage holder 2.

In Fig. 2, schematically, in cross-sectional view, a tapping apparatus 1 according to the invention is shown, in an alternative embodiment. Identical parts have identical reference numerals. In this embodiment, the dosing device 13 is designed such that upon operation of the operating button 32 for opening the valve 29, also the rod 17 is moved, so that the valve 14 can be opened so that the second component 24 can be added in a desired extent to the first component 23. In one embodiment, the rod 17 can directly be connected to for instance a moving part of the valve 29 or the operating button 32 or abut thereagainst, so that a downward movement of the operating button 32 for opening the valve 29 simultaneously opens the valve 14. In a variant shown in Fig. 2, between the wall part 16 connected to the rod 17 and the valve 29 or the operating button 32 a spring 33 is provided. When pushing in the operating button 32 for opening the valve 29, the spring 33 will be compressed when the pressure in the second compartment 12 is higher than approximately the desired pressure P_{bev}. Only when the pressure in the second compartment 12 is lower then the desired pressure Pᵣₑₜ, the spring 33 will press the wall 16 away and downwards and open the valve 14. As a result, the valve 14 is prevented from being opened when the pressure in the inner space 6 is sufficiently high.

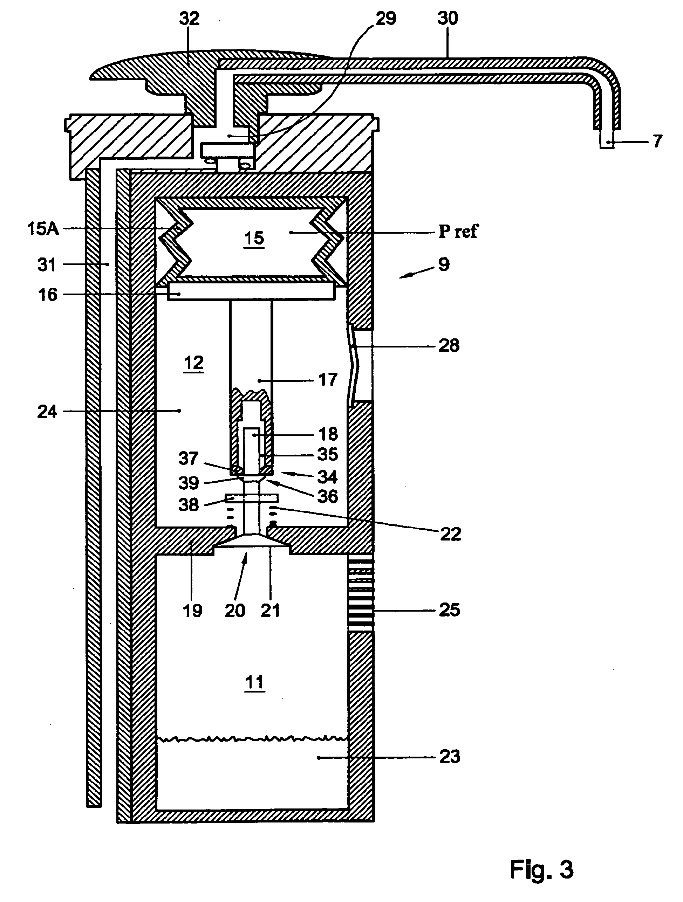

In Fig. 3, a further embodiment of a pressure regulating device 9 is shown, which is substantially equal to the one in Fig. 1 but can also be designed as shown in Fig. 2. This embodiment is described only in so far as it does not correspond with the above-described embodiments.

In this embodiment, the chamber 15 is designed as a bellows 15A. Such a bellows can be manufactured from, for instance, plastic or metal. Metal offers the advantage that it is gastight without special measures having to be taken. The bellows 15A has a flexible concertina wall so that the wall part 16 is movable. Such a bellows can be used in the embodiments of Figs. 1, 2 or 5 while in a chamber 15 an embodiment of Fig. 3 can also be used in an apparatus according to Fig. 1, 2 or 5. The rod 17 is coupled to the wall part 16, which rod 17 is provided, on the end remote from the wall part 16, with a bore 35. This bore can be an axial bore. The valve rod 18 runs into the bore 34. Adjacent the open side 36 of the bore 34 a restriction 37 is provided, for instance a ring element which is somewhat flexible. In Fig. 3, the regulating device 9 is shown in a position of use, as will be described further. On the valve rod, a spring plate 38 is provided, against which the spring 22 bears. On the side of the plate 38 remote from the wall 19, a stop element such as a ring 39 is provided with a conical form tapering in the direction of the plate 38. In the position of use shown in Fig. 3, this abuts against the outside of the restriction 37. As a result, the valve 14 can be opened by moving the wall part 16 in the direction of the wall 19.

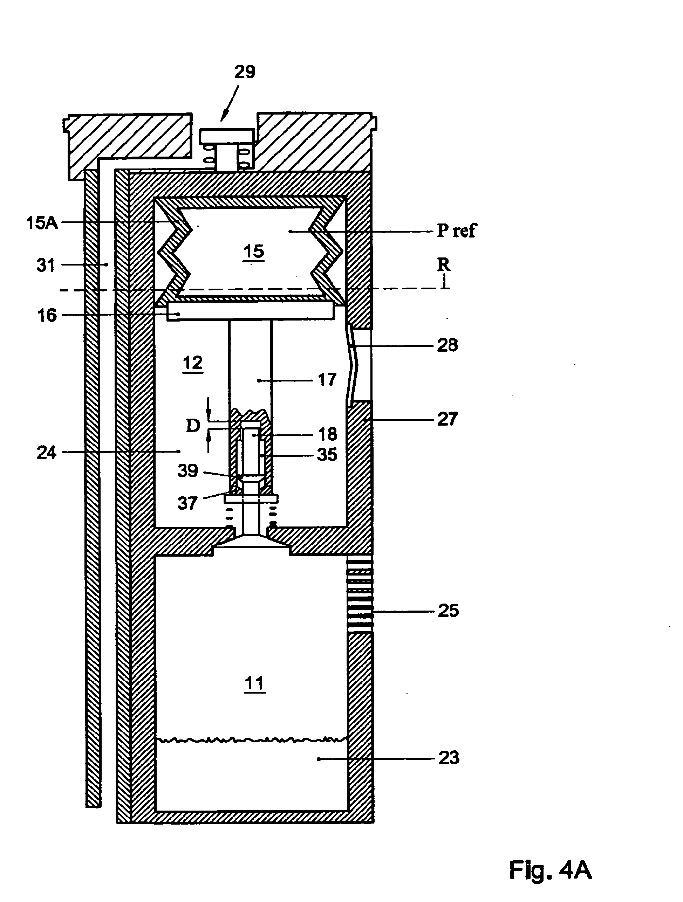

In Figs. 4A-D, schematically, it is shown in four steps how a tapping apparatus 1 can be set and used, in particular but not limited to an embodiment having a regulating device according to Fig. 3.

In Fig. 4A, a regulating device 9 is shown in inactive position. The regulating device 9 is preferably in this position prior to filling of the beverage holder 2. In this condition, pressure change in the compartments 11, 12 and/or in the inner space 6 or the chamber 15 cannot lead to opening of the valve 14. To that end, the stop element 39 is pressed beyond the restriction 37 in the bore 34, such that the valve rod 18 can move freely over a range D with respect to the rod 17. Pressure changes in the inner space 6 with respect to the reference pressure P_{ref} in the chamber 15 will therefore indeed move the rod 17 but within the pressure changes that can be expected, the rod 17 will not carry the valve rod 18 along and the valve 14 will therefore not be opened. Therefore, the first and second component 23, 24 will not be joined and no gas development will be obtained.

In Figs. 4A-D, an interrupted line R has been drawn at the location of the position of the wall part 16 when the reference pressure P_{ref} in the chamber 15 and the pressure in the second compartment 12 are at an equilibrium, with the pressure regulating device 9 in active position. As shown in Fig. 4A, in the inactive position, the wall part 16 is preferably under this line R.

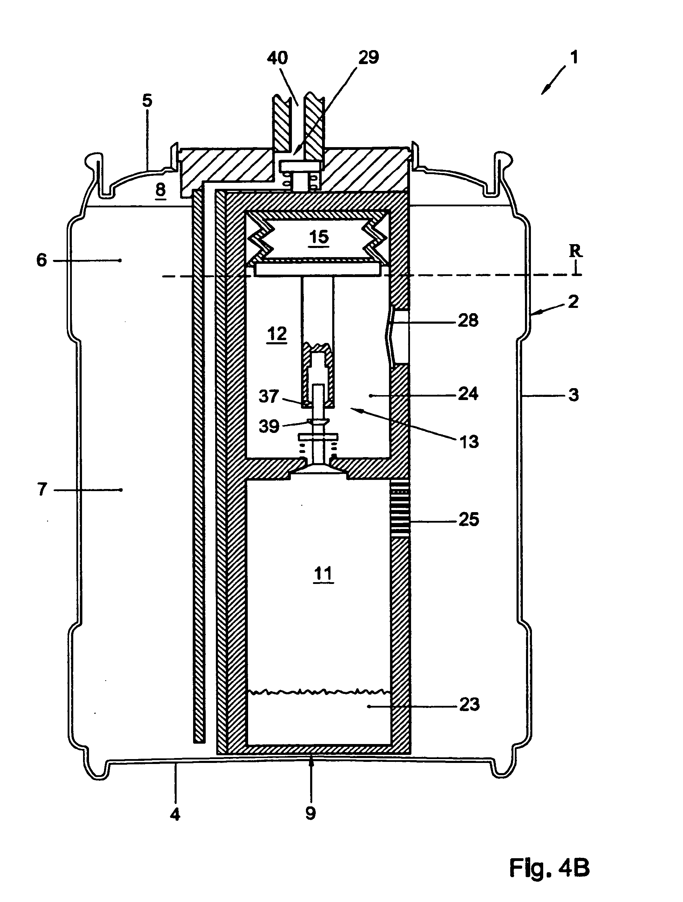

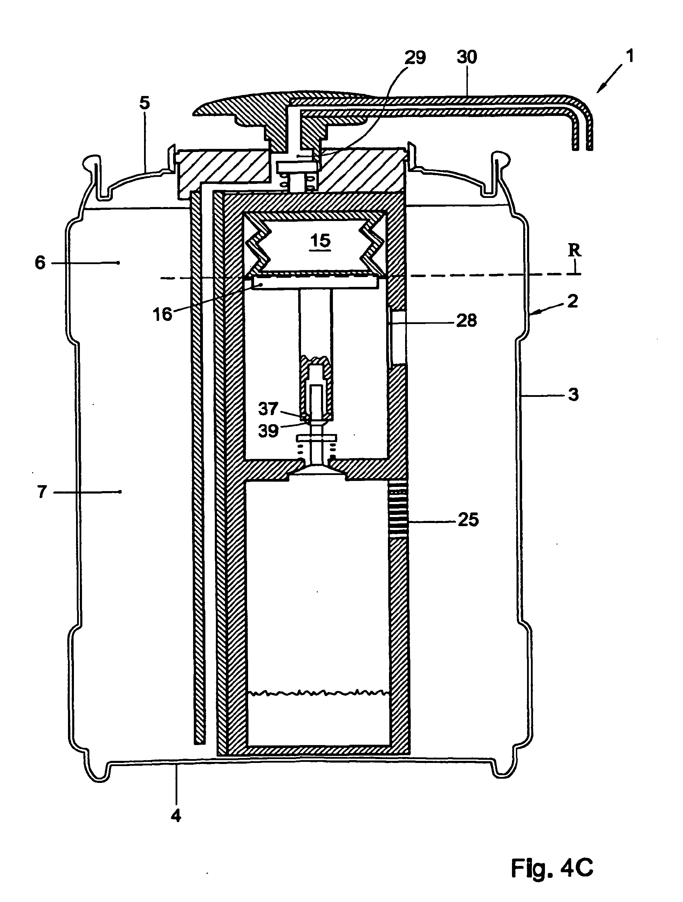

In Fig. 4B, a supply tube 40 is placed on the valve 29. With it, an excess pressure is provided in the inner space 6, for instance by introducing a small amount of CO₂ gas into the inner space. As a result, the pressure in the second compartment 12 is increased to clearly above the reference pressure P_{ref}. The wall 16 is moved above the line R, i.e. in the direction of the cover 5. As a result, the rod 17 is moved along the valve rod 18, such that the stop element 39 is pulled through the restriction 37 which is simplified by the conical shape thereof. In this condition, the regulating device 9 is activated. A part of the additional CO₂ will be absorbed by the beverage, so that the pressure drops to some extent and the wall part 16 moves down again, approximately to the line R as shown in Fig. 4C. Here, the restriction comes to lie at the top of the stop element 39.

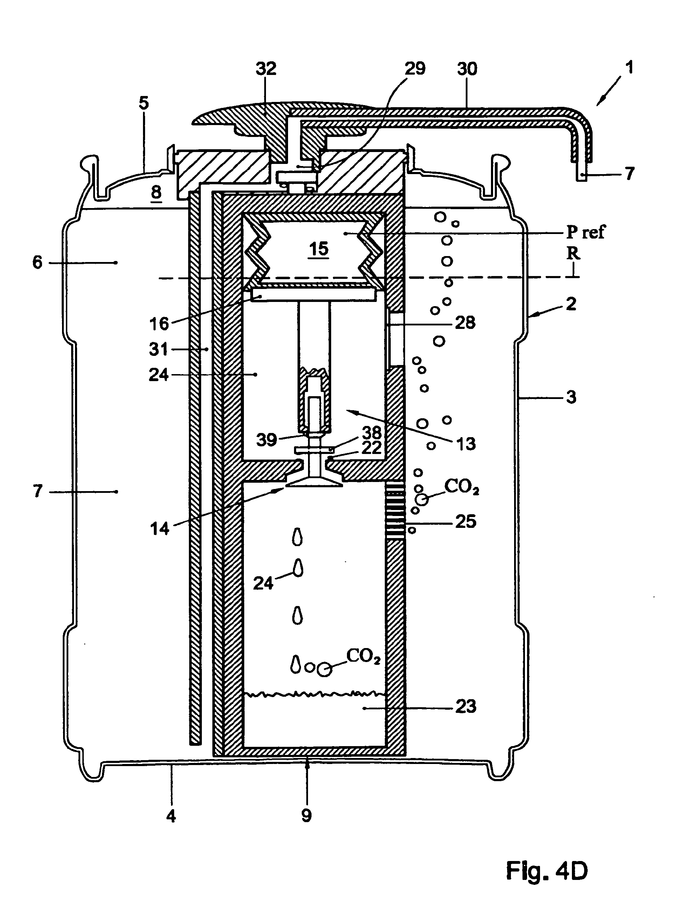

In Fig. 4D, it is shown that the valve 14 is opened during tapping. To that end, the operating button 32 is moved downwards so that beverage can flow away via the riser, valve and dispensing tube. As a result, the pressure in the inner space 6 will be reduced, with corresponding or at least representative reduction of the pressure in the second compartment 12. Owing to this pressure reduction, the wall part 16, as a result of the reference pressure P_{ref} in the chamber and/or the pressure through the spring arranged therein, will be moved down again in the second compartment 12. Here, the rod 17 pushes the valve rod 18 down and opens the valve 14. Then, an amount of the second component 24 flows via the valve 14 into the first compartment 11 and mixes and reacts with the first component 23 present therein, so that a desired amount of gas develops. This gas will flow at least substantially through the first membrane 25 and optionally along the valve 14 and via the second membrane 28 into the inner space 6 and into the second compartment 12, increasing the pressure proportionally. As a result, the wall part 16 is pressed back to the line R and the spring 22 will close the valve 14. Thus, the development of gas and the associated pressure increase are stopped.

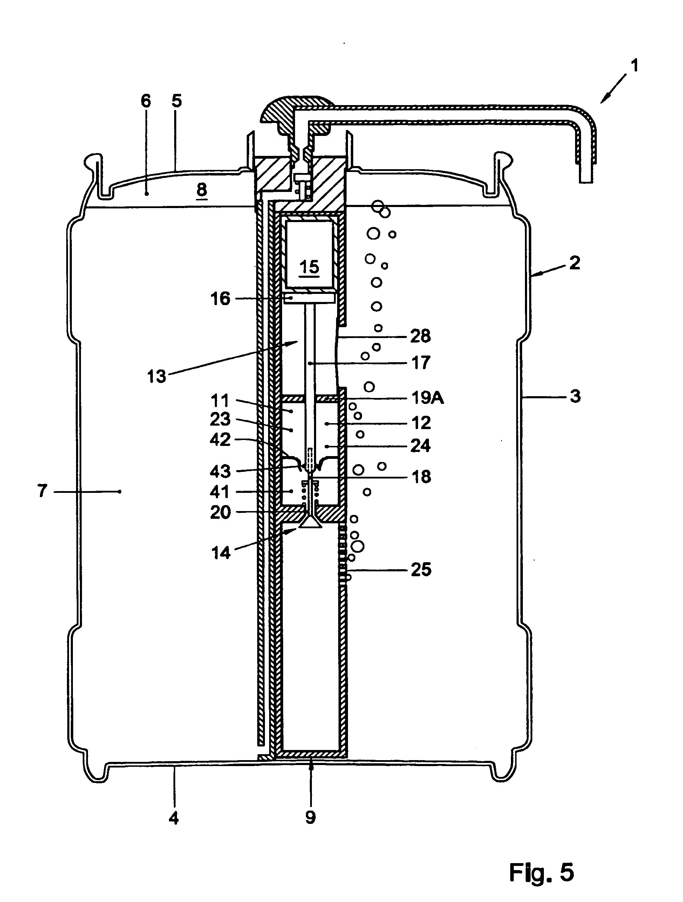

In Fig. 5, a further alternative embodiment of a regulating device according to the invention is shown. In this embodiment, the first and second component 23, 24 are provided in side-by-side compartments 11, 12. A rod 17 of the dosing device 13 is connected, on the one side, to the wall part 16 of the chamber 15 and, on the other side, to the valve 14. Below the two compartments 11, 12 a third compartment 41 is provided, which is separated via a sealing 42 such as a foil or valves (not shown) from the first and second compartment 11, 12, respectively. The rod 17 is provided with an element 43 for opening the sealing 42, so that the first and second component 23, 24 are added to the third compartment 41. By opening the sealing 42 to a greater or lesser extent, the mixing of the components can be regulated in a dosed manner. Preferably, opening the sealing 42 is obtained by a user, for instance when the operating button is pushed in for the first time. The wall part 16 is separated from the first and second compartment 11, 12 by a partition wall 19A through which the rod 17 extends. It will be clear that gas development will occur when the components 23, 24 mix. As a result, the pressure in the compartments 11, 12, 41 will increase. When in the inner space 6 the pressure decreases the wall part 16 will move downwards and thus open the valve 14. As a result, gas under pressure is allowed from the compartments 11, 12, 41 into the inner space 6 for bringing the pressure therein back to almost the desired pressure.

By way of illustration, an example will be described of used components 23, 24, which example should not be construed to be limitative in any manner. Depending on the desired use, the skilled person will be able to each time select a suitable set of components in a simple manner without further invention.

In one embodiment, as a first component 23, sodium bicarbonate is used and as second component citric acid. Upon mixture, this gives a chemical reaction with the following components:

3NaHCO₃ + C₆H₈O₇ → 3CO₂ + 3H₂O + Na₃C₆H₅O₇

For instance 84 g of sodium bicarbonate and 64 g of citric acid can yield 12 litres of CO₂, at 2 bars pressure. 35 g sodium bicarbonate and 27 g of citric acid yield approximately 5 litres of CO₂ at approximately 2 Bar. By way of illustration, another possible reaction can be

Na HCO₃ + KHC₄H₄O₆ + H₂O → KNaC₄H₄O₆ + H₂CO₃ + H₂O

H₂CO₃ ↔ H₂O + CO₂

For instance 84 g of sodium bicarbonate and 188.2 g of potassium bitartrate yield approximately 12 litres of CO₂ at approximately 2 bar pressure. 35 g of sodium bicarbonate and 78.4 g of potassium bitartrate give approximately 5 litres of CO₂ at approximately 2 bar pressure.

It will be clear that a skilled person can select suitable amounts of chemicals depending on, *inter alia,* the amount of liquid (beverage) to be dispensed, desired dispensing pressure, flow resistances, temperature and the like.

Naturally, other chemicals and combinations thereof can be utilized, such as (bi) carbonates and acids and/or bases. Acids can for instance be selected from a group comprising but not limited to calcium phosphate and lactic acids, bases can be selected from, for instance, a group comprising but not limited to potassium bicarbonate and calcium carbonate. As reference pressure P_{ref} a pressure between 0.5 and 1.2 bar excess pressure can for instance be utilized, more particularly between 0.7 and 1.0 bar excess pressure. In an advantageous embodiment, a reference pressure of approximately 0.9 excess pressure or approximately 1.09 bar absolute is used. Such a pressure can be somewhat higher than the equilibrium pressure for CO₂ gas that is ideal for the beverage, while it can thus be achieved that the pressure in the inner space can be raised somewhat above such an equilibrium pressure, and therefore the regulating device will switch on less often. However, naturally, the reference pressure can also be set to the equilibrium pressure, for instance approximately 1.4 to 1.6 bar absolute.

Alternatively, a first and second component can be selected which substantially enter into an equilibrium reaction such as for instance an acid and a buffer. Such reactions are described in, for instance, WO 2008/000272, for instance on p. 4 and the examples. Such a combination of components is in particular but not exclusively suitable in an embodiment according to Fig. 5 of the present specification.

The invention is not limited in any manner to the embodiments represented in the specification. Many variations thereon are possible within the framework of the invention as outlined by the claims. For instance, the chamber 15 can be fixedly connected to the rod 17, while the movable wall part 16 is provided on the side of the valve 29 and the entire chamber 15 moves with pressure changes. Other components can be utilized for forming CO₂ or a different propellant. The regulating device 9 can be provided at other positions, optionally in combination with the valve and/or the riser. The regulating device can also be placed at a distance from the valve, for instance in the bottom or wall or outside the beverage holder, as long as gas can be introduced from the regulating device into the beverage holder.

## Claims

1. A tapping apparatus (1) for beverage, provided with a beverage holder (2) comprising a carbonated beverage and a pressure regulating device (9) in or connected to said beverage holder (2) for pressurising the carbonated beverage (7), which pressure regulating device (9) comprises at least one first (11) and one second compartment (12), wherein the first compartment (11) contains a first component (23) and the second compartment (12) a second component (24), which first and second component (23, 24) can react with each other while forming a gas, in particular CO₂ gas, wherein between the first and the second compartment (11, 12) at least a part of a dosing device (13) is provided and wherein at least one of the first and second compartment (12) is in communication with an inner space (6) of the beverage holder (2), **characterized in that** the dosing device (13) comprises a valve (14) between the compartments (11, 12), which can be opened and closed with the aid of a pressure regulator which comprises a wall part (16) which seals off a chamber (15) at least partly and is movable or deformable with respect to this chamber (15), wherein the volume of the chamber (15) can change through displacement of and/or deformation of the wall part (16) relative to the further chamber (15) under the influence of pressure change in the inner space (6) of the holder (1), pressure change in the first compartment (11), pressure change in the second compartment (12), pressure change in the chamber (15) and/or through mechanical influencing of the wall part (16) and/or the chamber (15), or a combination of two or more of these effects.

2. A tapping apparatus according to claim 1, wherein the first component (23) is a solid or a liquid.

3. A tapping apparatus according to any one of the preceding claims, wherein the pressure regulating device (9) is regulated by pressure changes in the inner space (6) of the beverage holder (2), wherein on one side of the wall part (16) a pressure prevails associated with the pressure prevailing in the inner space (6) of the holder (2), wherein the wall part (16) is connected to or can be connected to the valve (14), for opening and closing a passage between the two compartments (11, 12).

4. A tapping apparatus according to any one of the preceding claims, wherein one of the first and the second compartment (11, 12) is provided with a membrane (25, 28) which is gas-transmissive but liquid-tight, for forming the connection between the respective compartment (11, 12) and the inner space (6) of the beverage holder (2).

5. A tapping apparatus according to any one of the preceding claims, wherein the beverage holder (2) comprises a bottom (4), wherein the first compartment (11) is arranged in an area between the second compartment (12) and the bottom (4).

6. A tapping apparatus according to any one of the preceding claims, wherein the dosing device (13) is connected to a tap (29, 30, 32), such that if via the tap beverage is tapped from the tapping apparatus (1), an amount of the first component (23) is added to the second component (24).

7. A tapping apparatus according to any one of the preceding claims, wherein a series of first and/or second compartments (11, 12) is provided.

8. A tapping apparatus according to any one of the preceding claims, wherein the or a compartment (11) which is in communication with the inner space (6) has a volume in which through reaction of the first component (23) with the second component (24) gas development can take place such that as a result thereof the pressure in the respective compartment (11) rises and a passage between the first and second compartment (11, 12) can be closed.

9. A tapping apparatus according to any one of the preceding claims, wherein the beverage holder (2) is provided with an opening (10), wherein the regulating device (9) has been inserted through said opening (10) into the beverage holder (2).

10. A tapping apparatus according to any one of the preceding claims, wherein the regulating device (9) is provided with a tap (29, 30, 32) and a riser (31), connected to the tap and inserted into the beverage holder (2).

11. A pressure regulating device (9) for pressurising a beverage in a beverage container (2), provided with a first compartment (11) and a second compartment (12), wherein the first compartment (11) contains a first component (23) and the second compartment (12) a second component (24), and wherein at least one of the first and second compartment (11, 12) is provided with a connection (25, 28) for an inner space (6) of a beverage holder (2), wherein between the first and the second compartment (11, 12) at least part of a dosing device (13) is provided, **characterized in that** the dosing device (13) comprises a valve (14) between the compartments (11, 12), which can be opened and closed with the aid of a pressure regulator which comprises a wall part (16) which seals off a chamber (15) at least partly and is movable or deformable with respect to this chamber (15), wherein the volume of the chamber (15) can change through displacement of and/or deformation of the wall part (16) relative to the further chamber (15) under the influence of pressure change in the inner space (6) of the holder (1), pressure change in the first compartment (11), pressure change in the second compartment (12), pressure change in the chamber (15) and/or through mechanical influencing of the wall part (16) and/or the chamber (15), or a combination of two or more of these effects.

12. A method for regulating pressure in a beverage container comprising a carbonated beverage using a pressure regulating device according to claims 11, wherein upon pressure reduction in the carbonated beverage (7) comprising beverage container (2) a first component (23) is brought into contact with a second component (24) such that these components (23, 24) can react with each other while forming a gas, with which gas the pressure in the beverage holder (2) is increased, wherein at least one of the first and second component (23, 24) is added to the other of the first and the second component (23, 24) in a dosed manner by temporarily opening a connection between a first compartment (11) comprising the first component (23) and a second compartment (12) comprising the second component (24).

13. A method according to claim 12, wherein said dosing is adjusted to the pressure reduction in the beverage holder.

14. A method according to claim 12, wherein said dosing is obtained through operation of an operating element by a user.

15. A tapping apparatus according to claim 4, wherein both compartments (11, 12) are provided with a membrane (25, 28) in an opening connecting the respective compartment (11, 12) with the inner space (6) of the beverage holder (6).

## Patentansprüche

1. Zapfvorrichtung (1) für Getränke, die mit einem Getränkebehältnis (2) vorgesehen ist, umfassend ein kohlensäurehaltiges Getränk und eine Druckregelungsvorrichtung (9) in dem genannten Getränkebehältnis (2) oder mit diesem verbunden, um das kohlensäurehaltige Getränk (7) unter Druck zu setzen, wobei die Druckregelungsvorrichtung (9) mindestens eine erste (11) und eine zweite Zelle (12) umfasst, wobei die erste Zelle (11) eine erste Komponente (23) aufweist, und wobei die zweite Zelle (12) eine zweite Komponente (24) aufweist, wobei die erste und die zweite Komponente (23, 24) miteinander in Reaktion treten können, während sie ein Gas bilden, insbesondere CO₂-Gas, wobei zwischen der ersten und der zweiten Zelle (11, 12) zumindest ein Teil einer Dosierungsvorrichtung (13) vorgesehen ist, und wobei sich zumindest die erste Zelle oder die zweite Zelle (12) in Kommunikation mit einem Innenraum (6) des Getränkebehältnisses (2) befindet, **dadurch gekennzeichnet, dass** die Dosierungsvorrichtung (13) zwischen den Zellen (11, 12) ein Ventil (14) umfasst, das mithilfe eines Druckreglers geöffnet und geschlossen werden kann, welcher einen Wandabschnitt (16) umfasst, der eine Kammer (15) zumindest teilweise abschließt und im Verhältnis zu dieser Kammer (15) beweglich oder verformbar ist, wobei sich das Volumen der Kammer (15) durch Verschiebung und/oder Verformung des Wandabschnitts (16) im Verhältnis zu dem Rest der Kammer (15) unter dem Einfluss einer Druckveränderung in dem Innenraum (6) des Behältnisses (2), einer Druckveränderung in der ersten Zelle (11), einer Druckveränderung in der zweiten Zelle (12), einer Druckveränderung in der Kammer (15) und/oder durch mechanische Beeinflussung des Wandabschnitts (16) und/oder der Kammer (15) oder durch eine Kombination aus zwei oder mehreren dieser Effekte verändern kann.

2. Zapfvorrichtung nach Anspruch 1, wobei es sich bei der ersten Komponente (23) um einen Feststoff oder eine Flüssigkeit handelt.

3. Zapfvorrichtung nach einem der vorstehenden Ansprüche, wobei die Druckregelungsvorrichtung (9) durch Druckveränderungen in dem Innenraum (6) des Getränkebehältnisses (2) geregelt wird, wobei auf einer Seite des Wandabschnitts (16) ein Druck vorherrscht, der dem in dem Innenraum (6) des Behältnisses (2) vorherrschenden Druck zugeordnet ist, wobei der Wandabschnitt (16) mit dem Ventil (14) verbunden ist oder verbunden werden kann, um einen Durchgang zwischen den beiden Zellen (11, 12) zu öffnen und zu schließen.

4. Zapfvorrichtung nach einem der vorstehenden Ansprüche, wobei die erste Zelle oder die zweite Zelle (11, 12) mit einer Membran (25, 28) versehen ist, die gasdurchlässig, jedoch flüssigkeitsdicht ist, zur Bildung einer Verbindung zwischen der entsprechenden Zelle (11, 12) und dem Innenraum (6) des Getränkebehältnisses (2).

5. Zapfvorrichtung nach einem der vorstehenden Ansprüche, wobei das Getränkebehältnis (2) einen Boden (4) umfasst, wobei die erste Zelle (11) in einem Bereich zwischen der zweiten Zelle (12) und dem Boden (4) angeordnet ist.

6. Zapfvorrichtung nach einem der vorstehenden Ansprüche, wobei die Dosierungsvorrichtung (13) mit einer Zapfstelle (29, 30, 32) verbunden ist, so dass, wenn über die Zapfstelle Getränke von der Zapfvorrichtung (1) gezapft werden, der zweiten Komponente (24) eine Menge der ersten Komponente (23) zugesetzt wird.

7. Zapfvorrichtung nach einem der vorstehenden Ansprüche, wobei eine Reihe erster und/oder zweiter Zellen (11, 12) vorgesehen ist.

8. Zapfvorrichtung nach einem der vorstehenden Ansprüche, wobei die oder eine Zelle (11), die sich in Kommunikation mit dem Innenraum (6) befindet, ein Volumen aufweist, in dem durch die Reaktion der ersten Komponente (23) mit der zweiten Komponente (24) eine Gasentwicklung erfolgen kann, so dass als eine Folge davon der Druck in der entsprechenden Zelle (11) ansteigt, und ein Kanal zwischen der ersten und der zweiten Zelle (11, 12) geschlossen werden kann.

9. Zapfvorrichtung nach einem der vorstehenden Ansprüche, wobei das Getränkebehältnis (2) mit einer Öffnung (10) versehen ist, wobei die Regelungsvorrichtung (9) mit einer Öffnung (10) versehen ist, wobei die Regelungsvorrichtung (9) durch die genannte Öffnung (10) in das Getränkebehältnis (2) eingeführt worden ist.

10. Zapfvorrichtung nach einem der vorstehenden Ansprüche, wobei die Regelungsvorrichtung (9) mit einer Zapfstelle (29, 30, 32) und einer Steigleitung (31) versehen ist, welche mit der Zapfstelle verbunden und in das Getränkebehältnis (2) eingeführt ist.

11. Druckregelungsvorrichtung (9) zum unter Druck setzen eines Getränks in einem Getränkebehältnis (2), wobei die Vorrichtung mit einer ersten Zelle (11) und einer zweiten Zelle (12) versehen ist, wobei die erste Zelle (11) eine erste Komponente (23) aufweist, und wobei die zweite Zelle (12) eine zweite Komponente (24) aufweist, und wobei zumindest die erste oder die zweite Zelle (11, 12) mit einer Verbindung (25, 28) für einen Innenraum (6) eines Getränkebehältnisses (2) versehen ist, wobei zwischen der ersten und der zweiten Zelle (11, 12) zumindest ein Teil einer Dosierungsvorrichtung (13) vorgesehen ist, **dadurch gekennzeichnet, dass** die Dosierungsvorrichtung (13) zwischen den Zellen (11, 12) ein Ventil (14) umfasst, das mithilfe eines Druckreglers geöffnet und geschlossen werden kann, welcher einen Wandabschnitt (16) umfasst, der eine Kammer (15) zumindest teilweise abschließt und im Verhältnis zu dieser Kammer (15) beweglich oder verformbar ist, wobei sich das Volumen der Kammer (15) durch Verschiebung und/oder Verformung des Wandabschnitts (16) im Verhältnis zu dem Rest der Kammer (15) unter dem Einfluss einer Druckveränderung in dem Innenraum (6) des Behältnisses (2), einer Druckveränderung in der ersten Zelle (11), einer Druckveränderung in der zweiten Zelle (12), einer Druckveränderung in der Kammer (15) und/oder durch mechanische Beeinflussung des Wandabschnitts (16) und/oder der Kammer (15) oder durch eine Kombination aus zwei oder mehreren dieser Effekte verändern kann.

12. Verfahren zur Regelung des Drucks in einem Getränkebehältnis, welches ein kohlensäurehaltiges Getränk umfasst, unter Verwendung einer Druckregelungsvorrichtung nach Anspruch 11, wobei auf Druckreduzierung in dem kohlensäurehaltigen Getränk (7) in dem Getränkebehältnis (2) eine erste Komponente (23) in Kontakt mit einer zweiten Komponente (23) gebracht wird, so dass diese Komponenten (23, 24) miteinander in Reaktion treten können, während sie ein Gas bilden, wobei der Druck in dem Getränkebehältnis (2) durch dieses Gas erhöht wird, wobei zumindest die erste oder die zweite Komponente (23, 24) der anderen Komponente der ersten und der zweiten Komponente (23, 24) dosiert zugesetzt wird, indem eine Verbindung zwischen einer ersten Zelle (11), welche die erste Komponente (23) umfasst, und einer zweiten Zelle (12), welche die zweite Komponente umfasst, vorübergehend geöffnet wird.

13. Verfahren nach Anspruch 12, wobei die genannte Dosierung an die Druckreduzierung in dem Getränkehalter angepasst wird.

14. Verfahren nach Anspruch 12, wobei die genannte Dosierung durch die Betätigung eines Betätigungselements durch einen Benutzer erhalten wird.

15. Zapfvorrichtung nach Anspruch 4, wobei beide Zellen (11, 12) in einer Öffnung, welche die jeweilige Zelle (11, 12) mit einem Innenraum (6) des Getränkebehältnisses (2) verbindet, mit einer Membran (25, 28) versehen sind.

## Revendications

1. Appareil de soutirage (1) de boisson, doté d'un support de boisson (2) qui comprend une boisson gazeuse et un dispositif de régulation de la pression (9) situé dans ledit support de boisson (2) ou connecté à celui-ci, destiné à pressuriser la boisson gazeuse (7), ledit dispositif de régulation de la pression (9) comprend au moins un premier compartiment (11) et un second compartiment (12), dans lequel le premier compartiment (11) contient un premier composant (23) et le second compartiment (12) contient un second composant (24), lesquels premier et second composants (23, 24) peuvent réagir l'un avec l'autre tout en formant un gaz, en particulier du gaz CO₂, dans lequel une partie au moins d'un dispositif de dosage (13) est fournie entre les premier et second compartiments (11, 12) et dans lequel l'un au moins des premier et second compartiment (11, 12) est en communication avec un espace intérieur (6) du support de boisson (2), **caractérisé en ce que** le dispositif de dosage (13) comprend une soupape (14) située entre les compartiments (11, 12), qui peut être ouverte et fermée à l'aide d'un dispositif de régulation de la pression qui comprend une partie de paroi (16) qui obture au moins en partie une chambre (15) et qui peut être déplacée ou déformée par rapport à cette chambre (15), dans lequel le volume de la chambre (15) peut changer par l'intermédiaire d'un déplacement et/ou d'une déformation de la partie de paroi (16) par rapport à l'autre partie de la chambre (15) sous l'influence d'un changement de pression de l'espace intérieur (6) du support (1), d'un changement de pression dans le premier compartiment (11), d'un changement de pression dans le second compartiment (12), d'un changement de pression dans la chambre (15) et/ou par l'intermédiaire de l'influence mécanique de la partie de paroi (16) et/ou de la chambre (15), ou d'une combinaison de deux de ces effets ou plus.

2. Appareil de soutirage selon la revendication 1, dans lequel le premier composant (23) est un solide ou un liquide.

3. Appareil de soutirage selon l'une quelconque des revendications précédentes, dans lequel le dispositif de régulation de la pression (9) est régulé par des changements de la pression dans l'espace intérieur (6) du support de boisson (2), dans lequel une pression associée à la pression qui règne dans l'espace intérieur (6) du support (2) règne sur un côté de la partie de paroi (16), dans lequel la partie de paroi (16) est connectée ou peut être connectée à la soupape (14), de façon à ouvrir et à fermer un passage entre les deux compartiments (11, 12).

4. Appareil de soutirage selon l'une quelconque des revendications précédentes, dans lequel l'un des premier et second compartiments (11, 12) est doté d'une membrane (25, 28) qui laisse passer le gaz mais qui est étanche vis-à-vis du liquide, de façon à former la connexion entre le compartiment respectif (11, 12) et l'espace intérieur (6) du support de boisson (2).

5. Appareil de soutirage selon l'une quelconque des revendications précédentes, dans lequel le support de boisson (2) comprend un fond (4), dans lequel le premier compartiment (11) est agencé dans une zone située entre le second compartiment (12) et le fond (4).

6. Appareil de soutirage selon l'une quelconque des revendications précédentes, dans lequel le dispositif de dosage (13) est connecté à un robinet (29, 30, 32), de telle sorte que si la boisson est soutirée de l'appareil de soutirage (1) par l'intermédiaire du robinet, une quantité du premier composant (23) est ajoutée au second composant (24).

7. Appareil de soutirage selon l'une quelconque des revendications précédentes, dans lequel est prévue une série de premiers et/ou de seconds compartiments (11, 12).

8. Appareil de soutirage selon l'une quelconque des revendications précédentes, dans lequel un compartiment (11) qui est en communication avec l'espace intérieur (6) présente un volume dans lequel, en raison de la réaction du premier composant (23) avec le second composant (24), un développements de gaz peut se produire de telle sorte qu'il en résulte une élévation de la pression dans le compartiment respectif (11) et une fermeture du passage entre les premier et second compartiments (11, 12).

9. Appareil de soutirage selon l'une quelconque des revendications précédentes, dans lequel le support de boisson (2) est doté d'une ouverture (10), dans lequel le dispositif de régulation (9) a été inséré dans le support de boisson (2) à travers ladite ouverture (10).

10. Appareil de soutirage selon l'une quelconque des revendications précédentes, dans lequel le dispositif de régulation (9) est doté d'un robinet (29, 30, 32) et d'une canalisation verticale (31), connectée au robinet et insérée dans le support de boisson (2).

11. Dispositif de régulation de la pression (9) destiné à pressuriser une boisson dans un contenant de boisson (2), doté d'un premier compartiment (11) et d'un second compartiment (12), dans lequel le premier compartiment (11) contient un premier composant (23) et le second compartiment (12) contient un second composant (24), et dans lequel l'un au moins des premier et second compartiments (11, 12) est doté d'une connexion (25, 28) vers un espace intérieur (6) d'un support de boisson (2), dans lequel une partie au moins d'un dispositif de dosage (13) est disposée entre les premier et second compartiments (11, 12), **caractérisé en ce que** le dispositif de dosage (13) comprend une soupape (14) située entre les compartiments (11, 12), qui peut être ouverte et fermée à l'aide d'un dispositif de régulation de la pression qui comprend une partie de paroi (16) qui obture au moins en partie une chambre (15) et qui peut être déplacée ou déformée par rapport à cette chambre (15), dans lequel le volume de la chambre (15) peut changer par l'intermédiaire d'un déplacement et/ou d'une déformation de la partie de paroi (16) par rapport à l'autre partie de la chambre (15) sous l'influence d'un changement de pression de l'espace intérieur (6) du support (1), d'un changement de pression du premier compartiment (11), d'un changement de pression du second compartiment (12), d'un changement de pression dans la chambre (15) et/ou par l'intermédiaire de l'influence mécanique de la partie de paroi (16) et/ou de la chambre (15), ou d'une combinaison de deux de ces effets ou plus.

12. Procédé destiné à réguler la pression dans un contenant de boisson qui comprend une boisson gazeuse à l'aide d'un dispositif de régulation de la pression selon la revendication 11, dans lequel lors d'une réduction de la pression de la boisson gazeuse (7) que comprend le contenant de boisson (2), un premier composant (23) est mis en contact avec un second composant (24) de telle sorte que ces composants (23, 24) puissent réagir l'un avec l'autre tout en formant un gaz, grâce à quoi la pression du gaz dans le support de boisson (2) augmente, dans lequel l'un au moins des premier et second composants (23, 24) est ajouté à l'autre des premier et second composants (23, 24) d'une façon dosée en ouvrant de manière temporaire une connexion entre un premier compartiment (11) qui comprend le premier composant (23) et un second compartiment (12) qui comprend le second composant (24).

13. Procédé selon la revendication 12, dans lequel ledit dosage est réglé selon la réduction de pression dans le support de boisson.

14. Procédé selon la revendication 12, dans lequel ledit dosage est obtenu par l'intermédiaire de l'activation par un utilisateur d'un élément de fonctionnement.

15. Appareil de soutirage selon la revendication 4, dans lequel les deux compartiments (11, 12) sont dotés d'une membrane (25, 28) située dans une ouverture qui connecte le compartiment respectif (11, 12) à l'espace intérieur (6) du support de boisson (6).
